# EUROPEAN PATENT SPECIFICATION

(11) **EP 0 548 058 B1**
(45) Date of publication and mention of the grant of the patent: **05.03.1997**
(21) Application number: 93200521.8
(22) Date of filing: 05.04.1991
(51) Int. Cl.: A01K 1/12, A01J 7/00

(54) **An arrangement for positioning animals in a box**
Vorrichtung zum Positionieren von Tieren in einer Box
Dispositif pour positionner les animaux dans un box

(30) Priority: 10.04.1990 NL 9000836
(43) Date of publication of application: 23.06.1993
(62) Divisional of application: 91200792.9
(73) Proprietor: C. van der Lely N.V., NL-3155 PD Maasland (NL)
(72) Inventor: Van Den Berg, Karel, NL-2971 BR Bleskensgraaf (NL); Fransen, René, NL-3135 ZD Vlaardingen (NL)
(74) Representative: Mulder, Herman

(56) References cited:
- EP-A- 0 188 303
- EP-A- 0 306 579
- DE-A- 2 340 421
- DE-U- 8 508 312
- US-A- 4 010 714

## Description

The present invention relates to an arrangement for positioning animals, such as cows, in a box, which arrangement comprises movable means for letting an animal in and out of the box as well as control means therefore and positioning means for adjusting the animal to a position defined relative to a vertical plane arranged in the longitudinal direction of the box, as well as for maintaining it in that position for at least part of its tune of stay therein, said positioning means including two guide members being arranged near opposite longitudinal sides of the box, which guide members furthermore are operated by means of a cylinder and constitute part of the movable means.

Such an arrangement is known from DE-OS-23 40 421. In the arrangement described, the entrance door is used to position the animal in the box. The entrance door is operated by means of a cylinder. This arrangement has the disadvantage that when the animal moves sidewardly the cylinder is loaded.

The invention has for its object to provide an arrangement for positioning animals, in which, among others, the above mentioned disadvantage is prevented or at least minimized.

To this end, the arrangement according to the invention is provided with separate blocking means which, when the animal enters the box or has already entered it and when a guide member is moved into the direction of a relevant side of the animal or is in contact therewith, block movement of the guide member in a direction opposite to the said direction of the relevant side. In a specific embodiment, the blocking means include a ratchet, the housing of which is preferably mounted on the box frame in such a manner as to be capable of hinging, while the ratchet further may be provided with a guide slot, through which travels a rack that also constitutes part of the ratchet and is connected pivotably to one of the guide members. In addition, the ratchet may include a pawl which is connected movably to the ratchet housing and, under the action of a spring, meshes with the teeth of the rack.

In a further embodiment the arrangement may be provided with a decoupling means which, preferably, is constituted by an operating cylinder for eliminating the limitation in freedom of movement of the relevant guide member as imposed by the ratchet. Specifically, when the arrangement is applied in an implement for automatically milking animals, a computer will be provided, by means of which signals can be generated to control the operating cylinder and/or the decoupling member.

For a better understanding of the invention and to show how the same may be carried into effect, reference will now be made, by way of example, to the accompanying drawings, in which:
Figure 1 is a plan view of the arrangement for positioning animals in a box, and
Figure 2 is a side view of a detail of this arrangement.

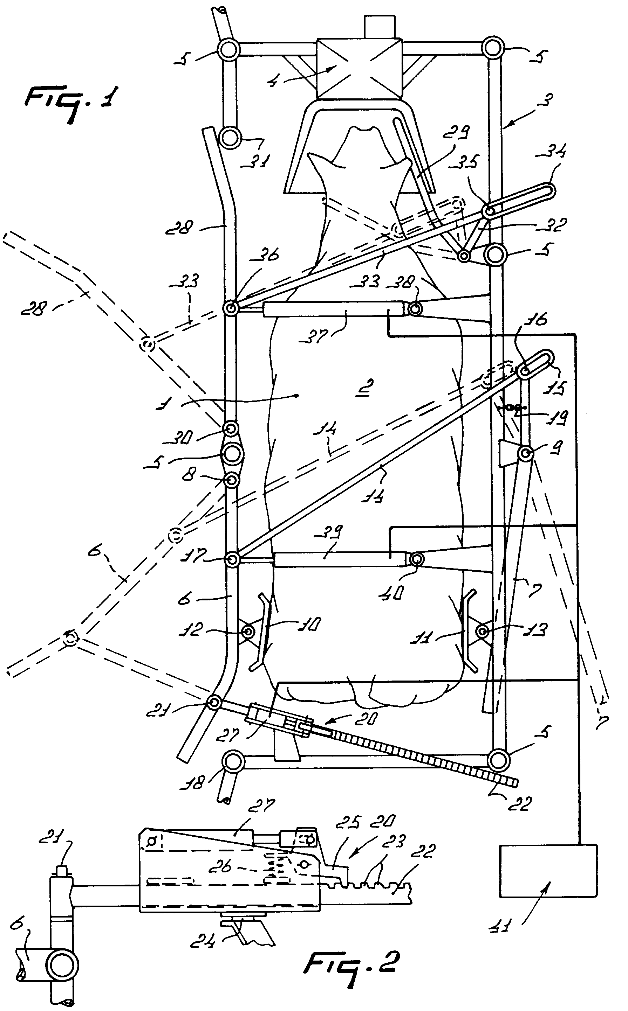

Figure 1 shows in a plan view a cow 1 in a box 2 provided with movable means 6 and 28 for letting the cow 1 in and out of the box 2 and control means 39 and 37, respectively, for the said movable means 6 and 28. The box 2 furthermore includes positioning means 6 and 7 for adjusting the cow 1 to a position defined relative to the box as well as for maintaining it in that position for at least part of its time of stay therein. In the embodiment shown in Figure 1, the portion 6 of the movable means constitutes part of the positioning means. The positioning means 6 and 7 adjust the cow 1 to a position defined with respect to a line in the longitudinal direction of the box 2.

More in particular, the positioning means 6, 7 are constituted by guide members which can be moved against a relevant side of the cow 1. The guide member which constitutes part of the positioning means 6, 7 is also denoted by the reference numeral 6. Likewise, the portion 28 of the movable means is constituted by a guide member denoted by the same reference numeral 28.

In the embodiment, the boundary of the box 2 is formed by a frame 3 comprising uprights 5 and the guide members 6 and 28. By means of the guide members 6 and 28 which are pivotal about substantially vertical shafts 8 and 30, respectively, the cow 1 can be let in or out of the box 2 by a signal supplied by a computer 41, after the respective control means 39 and 37 have been energized. On admitting the cow 1 into the box 2, the guide member 6 is in a position as indicated by interrupted lines in Figure 1. The access to the box 2 is then perfectly free for the cow 1, so that it can advance unimpededly thereinto until its head reaches a manger 4.

In order to achieve a co-operation between the positioning means 6 and 7, the guide member 6 is connected to the guide member 7 via an intermediate rod 14. The guide member 7 is pivotal about the substantially vertical pivot shaft 9 and is positioned by means of a vertical pivot shaft 16 in the guide slot 15 of the intermediate rod 14. In addition, in accordance with the embodiment of Figure 1, the two guide members 6, 7 are provided with stops 10 and 11, respectively, which stops are pivotal about substantially vertical shafts 12, 13. Hereby is effected a contact area which adapts itself to the cow's body when one or both of the stops 10, 11 are in contact with a relevant side of cow 1.

The operation of the positioning means 6, 7 is effected by means of a signal applied by the computer 41 to the control means, and more specifically to a pneumatic, hydraulic or electro-mechanical cylinder 39 constituting part thereof. The cylinder 39 is arranged capably of pivotal movement between a substantially vertical pivot shaft 40 provided on the frame 3 and a substantially vertical pivot shaft 17 located on the guide member 6. It will be obvious that the positioning means 6, 7 may also be controlled in a different manner, e.g. by an electric motor mounted in the floor of the box 2 and coupled to the vertical shaft 9.

In addition, there are provided limiting means to bound the movement of the guide members 6, 7. A first limiting means is constituted by the frame 3 of the box 2. A further limiting means 18, which in this embodiment is constituted by a corner post of the box 2, ensures that the guide member 6 is bounded in its movement. In a similar manner, the guide member 28 is bounded in its freedom of movement by the limiting means 31. Furthermore there are provided limiting means in the form of a flexible connection between the respective guide members 7, 6 and 28 and the frame 3 of the box 2. A first of these limiting means is constituted by a chain or rope 19 and is arranged between the frame 3 and the guide member 7.

In the construction described, the remaining flexible connections belonging to the latter limiting means are constituted by the control means 39, 37 for controlling the movable means 6, 28 or the positioning means 6, 7, in so far as the movable means 6, 28 constitute part thereof, or at least of one of the guide members 6, 7.

The construction described furthermore includes blocking means 20 (see Figure 2) which, when the cow 1 enters the box 2 or has already entered it and when a guide member 6, 7 is moved towards a relevant side of the cow 1 or is already in contact therewith, block a movement of the guide member 6, 7 in a direction opposite to the aforementioned direction. The blocking means include a ratchet 20 which by means of its housing is connected pivotably to the frame 3 of the box 2 via a vertical pivot shaft 24 and is provided with a guide slot, through which travels a rack 22 that also constitutes part of the ratchet and is connected pivotably to the guide member 6 about the vertical shaft 21. In addition, the ratchet 20 includes a pawl 25 which is connected movably to the housing and, under the action of a spring 26, meshes with the teeth 23 of the rack 22. In this embodiment, the bounding of the freedom of movement of the relevant guide member 6, 7, as imposed by ratchet 20, can be eliminated by means of a decoupling member 27 constituted by an operating cylinder.

In the embodiment of Figure 1, the box 2 has a manger 4, while furthermore there are provided expelling means, by means of which the cow 1 is forced to turn its head away from the manger 4. The expelling means also provide that the manger can be closed. For that purpose, the expelling means comprise a guide member 29 as well as a lever mechanism 32, 33, by means of which the guide member 29 is coupled to the movable means 28 for letting the cow 1 out of box 2. The lever mechanism 32, 33 comprises a lever arm 32 which is connected rigidly to the guide member 29 and which together with the guide member 29 constitutes a pivotal connection about the substantially vertical pivot shaft 30 to the frame 3 of the box 2, as well as an intermediate rod 33, the one end of which is connected pivotably via the substantially vertical pivot shaft 36 to the movable means 28 for letting the cow 1 out of box 2, while the other end is connected, capably of movement about the substantially vertical pivot shaft 35 in a slot 34 located in a fixed position relative to the intermediate rod 33, to the lever arm 32.

For the control of the movable means 28 for letting the cow 1 out of the box 2 and/or for that of the guide member 29, the control means 37 according to this construction are formed by an operating cylinder. This operating cylinder 37 may be a pneumatic, hydraulic or electromechanical cylinder.

The arrangement described in the foregoing operates as follows:
By decoupling the ratchet 20 and energizing the operating cylinder 39, the access to box 2 is released and the cow 1 can enter the box 2.

The coupling of the two guide members 6, 7 by means of the intermediate rod 14 ensures that, when the cow 1 walks into the box 2, the guide member 7 deflects to beyond the box 2 and thus does not constitute an obstruction for the entering cow 1.

Thereafter the cow 1 will advance further into the box 2 until its head reaches the manger 4. By energizing cylinder 39 again, the box 2 is closed and the two guide members 6, 7 move towards each other with a relative time delay. As a result of this, a portion of the space inside the box 2, seen in a line with respect to the longitudinal direction of box 2, is reduced. It will be obvious that, as long as cow 1 is approximately halfway between the two mutually advancing guide members 6, 7, it will experience a relatively gentle pressure, but that, when this is not the case, a greater pressure will be exercised on one side by a relevant stop 10 or 11, so that the cow 1 is compelled to move towards a position wherein there is an equal pressure on both sides.

A blocking of the guide members 6 and 7 by the ratchet 20 in the direction opposite to that of the guide member 6 ensures that the cow 1 cannot load the operating cylinder 39 and consequently move the guide members 6 and 7 in the outward direction.

When cow 1 is located in the position defined and fixed in the above-described manner, the treatment to which cow 1 is to be submitted can be started.

When after due course of time it is desired that the cow 1 should leave the box 2, then the ratchet 20 is decoupled, so that the hind side of the cow 1 is released, whereafter the cylinder 37 is energized.

The guide member 28 clears the exit and the intermediate rod 33 ensures that after a short time the guide member 29 follows this movement. The result is that, if cow 1 was still eating from the manger 4 or had already stopped doing so, its head is pushed in the direction of the exit.

It will be obvious that cow 1 will not like this posture and consequently will leave the box 2. The arrangement is then accessible again to the next animal.

## Claims

1. An arrangement for positioning animals, such as cows, in a box (2), which arrangement comprises movable means (6, 28) for letting an animal (1) in and out of the box (2) as well as control means therefore and positioning means for adjusting the animal (1) to a position defined relative to a vertical plane arranged in the longitudinal direction of the box (2), as well as for maintaining it in that position for at least part of its time of stay therein, said positioning means including two guide members (6, 7) being arranged near opposite longitudinal sides of the box (2), which guide members are furthermore operated by means of a cylinder (39) and constitute part of the movable means (6), characterized in that there are provided separate blocking means (20) which, when the animal (1) enters the box (2) or has already entered it and when a guide member (6) is moved into the direction of a relevant side of the animal (1) or is in contact therewith, block movement of the guide member in a direction opposite to the said direction of the relevant side.

2. An arrangement as claimed in claim 1, characterized in that the blocking means include a ratchet (20).

3. An arrangement as claimed in claim 2, characterized in that the ratchet housing is mounted on the box frame (39) in such a manner as to be capable of hinging and is provided with a guide slot, through which travels a rack (22) that also constitutes part of the ratchet and is connected pivotably to one of the guide members.

4. An arrangement as claimed in claim 3, characterized in that the ratchet (20) includes a pawl (25) which is connected movably to the ratchet housing and, under the action of a spring (26), meshes with the teeth (23) of the rack (22).

5. An arrangement as claimed in claim 2, 3 or 4, characterized in that the ratchet (20) is provided with a decoupling means (27) which, preferably, is constituted by an operating cylinder for eliminating the limitation in freedom of movement of the relevant guide member as imposed by the ratchet (20).

6. An arrangement as claimed in claim 1, 2, 3, 4 or 5, characterized in that there is provided a computer (41), by means of which control signals can be generated to control the operating cylinder (39) and/or the decoupling member (27).

## Patentansprüche

1. Vorrichtung zum Positionieren von Tieren, wie z. B. von Kühen, in einer Box (2), mit einer beweglichen Vorrichtung (6, 28) zum Betreten und Verlassen der Box (2) durch ein Tier (1) sowie mit einer Steuereinrichtung für diese Vorrichtung und einer Positioniereinrichtung, um das Tier (1) in einer Position relativ zu einer vertikalen Ebene zu positionieren, welche in Längsrichtung der Box (2) verläuft, und es in dieser Position zumindest für einen Teil seiner Aufenthaltsdauer in der Box zu halten, wobei die Positioniereinrichtung zwei Führungsglieder (6, 7) aufweist, die nahe gegenüberliegenden Längsseiten der Box (2) angeordnet sind, mittels eines Arbeitszylinders (39) betätigt werden und Bestandteil der beweglichen Vorrichtung (6) sind,
dadurch gekennzeichnet, daß eine separate Blockierung (20) vorgesehen ist, die, wenn das Tier (1) die Box (2) betritt oder bereits betreten hat und ein Führungsglied (6) in Richtung auf eine jeweilige Seite des Tieres (1) bewegt wird oder mit dieser Seite in Kontakt steht, die Bewegung des Führungsgliedes in einer Richtung blockiert, die zu der Richtung auf die jeweilige Seite des Tieres entgegengesetzt ist.

2. Vorrichtung nach Anspruch 1,
dadurch gekennzeichnet, daß die Blockierung eine Sperre (20) aufweist.

3. Vorrichtung nach Anspruch 2,
dadurch gekennzeichnet, daß das Gehäuse der Sperre an dem Boxrahmen (3) schwenkbar angeordnet und mit einem Führungsschlitz versehen ist, durch den eine Zahnstange (22) hindurchgeführt ist, die ebenfalls Bestandteil der Sperre und mit einem der Führungsglieder schwenkbar verbunden ist.

4. Vorrichtung nach Anspruch 3,
dadurch gekennzeichnet, daß die Sperre (20) eine Sperrklinke (25) aufweist, die mit dem Gehäuse der Sperre beweglich verbunden ist und unter der Kraft einer Feder (26) in die Zähne (23) der Zahnstange (22) eingreift.

5. Vorrichtung nach Anspruch 2, 3 oder 4,
dadurch gekennzeichnet, daß die Sperre (20) eine Entriegelungsvorrichtung (27) aufweist, die vorzugsweise durch einen Arbeitszylinder gebildet ist, um die von der Sperre (20) bewirkte Begrenzung der Bewegungsfreiheit des jeweiligen Führungsgliedes aufzuheben.

6. Vorrichtung nach Anspruch 1, 2, 3, 4 oder 5,
dadurch gekennzeichnet, daß ein Computer (41) vorgesehen ist, mittels dessen Steuersignale zum Steuern des Arbeitszylinders (39) und/oder des Entriegelungsgliedes (27) zu erzeugen sind.

## Revendications

1. Dispositif pour positionner des animaux, tels que des vaches, dans un box (2), lequel dispositif comprend des moyens mobiles (6, 28) pour permettre à un animal (1) d'entrer dans le box (2) et d'en sortir, ainsi que des moyens de commande de ceux-ci et des moyens de positionnement pour régler l'animal (1) vers une position définie par rapport à un plan vertical disposé dans le sens longitudinal du box (2) et pour le maintenir dans cette position pendant au moins une partie de son temps de séjour dans celui-ci, lesdits moyens de positionnement comportant deux organes de guidage (6, 7) disposés près des côtés longitudinaux opposés du box (2), lesquels organes de guidage sont en outre actionnés au moyen d'un vérin (39) et constituent une partie des moyens mobiles (6),
**caractérisé** en ce que sont prévus des moyens de blocage (20) séparés qui, quand l'animal (1) entre dans le box (2) ou bien y est déjà entré et quand un organe de guidage (6) est déplacé en direction d'un côté correspondant de l'animal (1) ou est en contact avec celui-ci, bloquent le mouvement de l'organe de guidage dans un sens opposé à ladite direction du côté correspondant.

2. Dispositif selon la revendication 1, caractérisé en ce que les moyens de blocage comportent un encliquetage (20).

3. Dispositif selon la revendication 2, caractérisé en ce que le boîtier du cliquet est monté sur le bâti (3) du box de manière à être capable de pivoter et est muni d'une fente de guidage à travers laquelle circule une crémaillière (22) qui constitue aussi une partie de l'encliquetage et qui est reliée de manière pivotante à un des organes de guidage.

4. Dispositif selon la revendication 3, caractérisé en ce que l'encliquetage (20) comporte un cliquet (25) qui est relié de manière mobile au boitier de l'encliquetage et qui, sous l'action d'un ressort (26), engrène avec les dents (23) de la crémaillière (22).

5. Dispositif selon les revendications 2, 3 ou 4, caractérisé en ce que l'encliquetage (20) est muni d'un moyen de découplage (27) qui est constitué, de préférence, par un vérin actionneur pour éliminer la limitation de la libérté de mouvement de l'organe de guidage correspondant, telle qu'elle est imposée par l'encliquetage (20).

6. Dispositif selon les revendications 1, 2, 3, 4 ou 5, caractérisé en ce qu'il est prévu un ordinateur (41) au moyen duquel des signaux de commande peuvent être générés pour commander le vérin actionneur (39) et/ou l'organe de découplage (27).
